(19) Europäisches Patentamt
European Patent Office
Office européen des brevets

(11) Veröffentlichungsnummer: **0 582 154 A1**

# (12) EUROPÄISCHE PATENTANMELDUNG

(21) Anmeldenummer: **93111847.5**

(22) Anmeldetag: **23.07.93**

(51) Int. Cl.[5]: **B01F 17/00**, B01F 17/02, B01F 17/04, B01F 17/06, B01F 17/08, B01F 17/10, B01F 17/12, B01F 17/14, B01F 17/44, B01F 17/50, B01F 17/52

(30) Priorität: **05.08.92 DE 4225922**

(43) Veröffentlichungstag der Anmeldung:
**09.02.94 Patentblatt 94/06**

(84) Benannte Vertragsstaaten:
**CH DE FR GB IT LI SE**

(71) Anmelder: **BAYER AG**

**D-51368 Leverkusen(DE)**

(72) Erfinder: **Mazanek, Jan, Dr.**
**Haferkamp 2**
**D-51061 Köln(DE)**
Erfinder: **von Bonin, Wulf, Dr.**
**Droste-Hülshoff-Strasse 9**
**D-51519 Odenthal(DE)**
Erfinder: **von Gizycki, Ulrich, Dr.**
**Wiembachallee 24**
**D-51379 Leverkusen(DE)**

(54) **Verwendung von Salzen mehrbasiger organischer Säuren mit mehrwertigen Kationen als Dispergiermittel für wässrige Dispersionen und wässrige Dispersionen, die derartige Dispergiermittel enthalten.**

(57) Die Verwendung von Salzen der Formel (I)

$$R\ (COO)_x^{\ominus}\quad (PO_3)_y^{2\ominus}\quad (SO_3)_z^{\ominus}\quad K_m^{p\oplus}\quad H_n^{\oplus}\qquad (I)$$

in der

R für einen gegebenenfalls Heteroatome enthaltenden organischen Kohlenwasserstoffrest und

$$K^{p\oplus}$$

für ein Kation der Wertigkeit p stehen und
der mittlere Wert für p größer ist als 1,2 und folgende Bedingungen gelten

x, y, z können jeweils für sich alleine Null oder eine ganze Zahl sein,

x + y/2 + z ist mindestens 2,

x + 2y + z = (p • m) + n und

n : m = 1 oder größer als 1

als Dispergiermittel für wässrige Dispersionen und wäßrige Dispersionen, die Salze der Formel (I) als Dispergiermittel enthalten.

EP 0 582 154 A1

Die vorliegende Erfindung betrifft die Verwendung von Salzen mehrbasiger organischer Säuren mit mehrwertigen Kationen als Dispergiermittel für wäßrige Dispersionen von beispielsweise Füllstoffen und/oder Pigmenten und wäßrige Dispersionen, beispielsweise von Füllstoffen und/oder Pigmenten, die derartige Dispergiermittel enthalten.

Wäßrige Dispersionen von z.B. Füllstoffen und/oder Pigmenten, die z.B. als Papierstreichfarbe verwendet werden können, enthalten im allgemeinen Feststoffe in Mengen von 30 bis 85 Gew.-%. Zugesetzte Dispergiermittel sollen bei gegebenem Feststoffgehalt der Dispersion die jeweils gewünschten rheologischen Eigenschaften verleihen, die Benetzung der zu dispergierenden Stoffe verbessern, beim Dispergiervorgang die Desagglomeration erleichtern und die fertige Dispersion gegen Agglomeration und Sedimentation stabilisieren.

Für diese Zwecke sind organische und anorganische Dispergiermittel bekannt. Als anorganische Dispergiermittel werden z.B. Phosphate, wie Natriumhexametaphosphat, eingesetzt. Diese zeigen eine gute Dispergierwirkung, haben aber den Nachteil, daß sie nicht hydrolysestabil sind. Das bedeutet, daß sich solche Dispersionen bei längerer Lagerung in unerwünschter Weise verdicken.

Als organische Dispergiermittel werden z.B. Salze von Polymeren und Copolymeren der Methacryl- und Acrylsäure mit niedrigen bis mittleren Molekulargewichten und einwertigen Kationen eingesetzt. Die DE-OS 2 700 444 beschreibt die Verwendung von nichtsalzförmigen Maleinsäureanhydrid-Copolymerisaten, die JP-OS 57/095 396 die Verwendung von Copolymeren der Acrylsäure und der Styrolsulfonsäure, die JP-OS 56/115 630 die Verwendung von Copolymeren mit ungesättigten Sulfonsäuren und die DE-OS 3 101 939 die Verwendung von phosphorhaltiger Polyacrylsäure-Copolymerer als Dispergiermittel. Weitere bekannte Dispergiermittel sind sulfonierte Polyesterharze (SU-PS 861 377) und Derivate von Styrol/Maleinsäureanhydrid-Copolymeren (SU-PS 903 438). Der Einsatz niedermolekularer nichtionischer Tenside als Dispergiermittel ist in der BE-PS 741 374 beschrieben. Weitere bekannte organische Dispergiermittel sind Salze von Zitronen- und Phosphonobutantricarbonsäure. Soweit die bekannten organischen Dispergiermittel Salze sind, enthalten sie einwertige Kationen, wie Kalium-, Natrium-, Ammonium-, Alkylammonium- oder Hydroxyalkylammonium-Ionen. Der Grund für den Einsatz einwertiger Kationen liegt darin, daß mehrwertige Kationen beim Einsatz gemäß dem Stand der Technik entweder das Dispergiermittel selbst oder die Dispersion durch Reaktion und/oder Ionenaustausch mit Säuregruppen ausflocken.

Die Wirksamkeit bekannter Dispergiermittel reicht in vielen Fällen nicht aus, um Dispersionen mit optimalen rheologischen Eigenschaften zu erhalten. Ist die Viskosität solcher Dispersionen zu hoch, so muß der Feststoffgehalt herabgesetzt werden, um technisch brauchbare Dispersionen, z.B. Streichfarben, zu erhalten. Dies hat eine Verschlechterung der Qualität dieser Streichfarben zur Folge, z.B. bezüglich ihrer Farbstärke, Deckkraft und Filmbildung.

Es besteht also noch ein Bedürfnis nach Dispergiermitteln, die Dispersionen mit verbesserten Eigenschaften ergeben.

Es wurde nun überraschenderweise gefunden, daß man verbesserte Dispergiermittel für Wasser enthaltende Dispersionen erhält, wenn man Salze von mehrbasigen Säuren, insbesondere Hydroxysäuren, mit mehrwertigen Kationen einsetzt, die gegebenenfalls noch intakte Säuregruppen enthalten. Man kann Salze von mehrbasigen Säuren mit mehrwertigen Kationen z.B. erhalten, indem man geeignete mehrbasige Säuren, insbesondere mehrbasige Hydroxysäuren, mit einer geringeren Menge mehrwertiger Kationen umsetzt, als für einen vollständigen Austausch aller vorhandenen sauren H-Atome erforderlich ist. Bei stöchiometrischem Einsatz von Säuren und Kationen werden Salze erhalten, die keine intakten Säuregruppen mehr enthalten.

Die vorliegende Erfindung betrifft deshalb die Verwendung von Salzen der Formel (I)

$$R\,(COO^{\ominus})_x\quad (PO_3^{2\ominus})_y\quad (SO_3^{\ominus})_z\quad K_m^{p\oplus}\quad H_n^{\oplus} \qquad (I)$$

in der

R für einen gegebenenfalls Heteroatome enthaltenden organischen Kohlenwasserstoffrest und

$$K^{p\oplus}$$

für ein Kation der Wertigkeit p stehen und

der mittlere Wert für p größer ist als 1,2 und folgende Bedingungen gelten

x, y, z können jeweils für sich alleine Null oder eine ganze Zahl sein,

$x + y/2 + z$ ist mindestens 2,

$x + 2y + z = (p \cdot m) + n$ und

$n : m = 1$ oder größer als 1

als Dispergiermittel für wässrige Dispersionen und wäßrige Dispersionen, die Salze der Formel (I) als Dispergiermittel enthalten.

In Formel (I) kann R beispielsweise für einen geradkettigen, verzweigten oder cyclischen, gesättigten oder ungesättigten organischen Rest stehen, der beispielsweise 1 bis 20.000 C-Atome enthält. Der Rest R ist vorzugsweise aus Ketten und/oder Ringen mit C-C-Verknüpfungen aufgebaut, kann aber gegebenenfalls auch in der Kette und/oder im Ring Heteroatome enthalten, wie Sauerstoff-, Stickstoff- und/oder Schwefelatome.

Der Rest R kann zusätzlich zu den $COO^{\ominus}$-,

$$PO_3^{2\ominus}-$$

und/oder $SO_3^{\ominus}$-Gruppen, die an ihn gebunden sind, weitere Substituenten enthalten, beispielsweise Ester-, Hydroxyester-, Säureamid-, Nitril-, OH-, SH- und/oder gegebenenfalls substituierte aromatische Gruppen.

Der Rest R enthält vorzugsweise 1 bis 5.000 C-Atome, insbesondere 2 bis 100 C-Atome.

Der Teil

$$R(COO)_x^{\ominus}\ (PO_3)_y^{2\ominus}\ (SO_3)_z^{\ominus}$$

der Verbindungen der Formel (I) kann beispielsweise aus dem Rest von Homo- oder Copolymeren von Acryl- und/oder Methacrylsäure bestehen, wobei als Comonomeren beispielsweise die Ester, Hydroxyester, Amide, N-substituierten Amide und andere Derivate von Acrylsäure und Methacrylsäure infrage kammen. Weiterhin kann es sich bei diesem Teil der Formel (I) beispielsweise um Reste von Hydrolysaten von Oligomeren, Cooligomeren, Polymeren und/oder Copolymeren des Acrylnitrils und/oder Methacrylnitrils handeln, sowie um Reste von gegebenenfalls kondensierten und/oder gegebenenfalls bis zu drei $C_1$-$C_{12}$-Alkylseitenketten enthaltenden Naphthalin- und/oder Benzol-di- oder -polysulfonsäuren, um Reste von Umsetzungsprodukten von Sulfanilsäure mit Polymeren (z.B. Maleinsäureanhydrid-Copolymeren), um Reste von Sulfobernsteinsäure, Sulfobernsteinsäurehalbestern, Zitronensäure, Zitronensäureester, Weinsäure, Äpfelsäure; Ascorbinsäure, $C_5$-$C_{12}$-Zuckersäuren und andere Hydroxylgruppen enthaltende, gegebenenfalls teilsubstituierte Di- oder Polycarbonsäuren, aus dem Rest von organische Reste enthaltende Phosphor-, Polyphosphor-, Phosphin- oder Phosphonsäuren, aus dem Rest von Phosphonocarbonsäuren (wie Phosphonobutantricarbonsäuren) oder um Reste von Malein-, Fumar-, Itakon-, Citrakon- oder Bernsteinsäure.

Bevorzugt handelt es sich bei dem Teil

$$R(COO)_x^{\ominus}\ (PO_3)_y^{2\ominus}(SO_3)_z^{\ominus}$$

der Verbindungen der Formel (I) um Reste von Tri- und/oder Tetracarbonsäuren mit insgesamt 4 bis 20 C-Atomen oder um Phosphonopolycarbonsäuren mit insgesamt 1 bis 10 P-Atomen und mit insgesamt 4 bis 20 C-Atomen. Ebenfalls bevorzugt handelt es sich bei diesem Teil der Formel (I) um den Rest eine Carbon-, Phosphor- und/oder Sulfonsäure, die gemäß dem Stand der Technik in Form von Salzen mit einwertigen Kationen als Dispergiermittel eingesetzt werden können. Besonders bevorzugt handelt es sich um Reste von Weinsäure, Zitronensäure, Äpfelsäure und Zuckersäuren, insbesondere um Zitronensäure.

Bei dem Teil

$$R(COO)_x^{\ominus}\ (PO_3)_y^{2\ominus}\ (SO_3)_z^{\ominus}$$

der Verbindungen der Formel (I) kann es sich um ein einheitliches Material handeln, aber auch um Gemische von Resten verschiedener Säuren.

In Formel (I) steht K vorzugsweise für ein Kation mit einer Wertigkeit von mindestens 2, beispielsweise für Magnesium-, Calcium-, Zink-, Eisen(II)-, Eisen(III)- und/oder Aluminium-Kationen. Es kommen auch mindestens 2-wertige Stickstoff enthaltende Kationen in Frage. Diese können sich beispielsweise von Oligo- oder Polyalkylenpolyaminen, Oligoethyleniminen und/oder Alkoxylierungsprodukten von Polyaminen ableiten. Insbesondere leiten sich derartige Kationen ab von Ethylendiamin, Polyethylenpolyaminen mit 3 bis 7 N-Atomen und Polypropylenpolyaminen mit 3 bis 7 N-Atomen. Bei K kann es sich um einheitliche Kationen oder um Gemische verschiedener Kationen handeln. Es kommen sowohl Gemische von 2-und/oder mehrwertigen Kationen untereinander als auch Gemische mit einwertigen Kationen, z.B. Natrium-, Kalium- und/oder Ammoniumionen infrage, wobei die letztgenannten Gemische eine mittlere Wertigkeit von wenigstens 1,2 aufweisen.

Die Bedingung n:m = 1 oder größer als 1 besagt, daß in den Salzen der Formel (I) gleich viel oder mehr saure H-Atome vorliegen als Kationen K. Wenn K z.B. ein dreiwertiges Kation ist, z.B.

$$Al^{3\ominus},$$

so kann n:m beispielsweise 1:1 bis 25:1 betragen. Wenn K z.B. ein zweiwertiges Kation ist, z.B.

$$Zn^{2\ominus},$$

so kann n:m beispielsweise 1:1 bis 20:1 betragen. Man kann solche sauren Salze der Formel (I) z.B. erhalten, indem man eine Säure der Formel (II)

$$R(COO)_x^{\ominus}\ (PO_3)_y^{2\ominus}\ (SO_3)_z^{\ominus}\ H^{\oplus}_{n'} \qquad (II),$$

in der

R, x, y und z die bei Formel (I) angegebene Bedeutung haben und x + y/2 + z mindestens 2 ist und die Bedingung gilt x + 2y + z = n' mit einer Menge Hydroxid der Formel (III)

$$K^{p\oplus}(OH)_p^{\ominus} \qquad (III),$$

in der

K und p die bei Formel (I) angegebene Bedeutung haben,

umsetzt, die geringer ist, als die zur vollständigen Neutralisation aller sauren H-Atome der Säure der Formel (II) erforderliche Menge.

Besonders bevorzugt sind Salze der Formel (I), bei denen z.B. im Falle p = 2 n im Mittel 3,8 bis 4,2 und z.B. im Falle p = 3 n im Mittel 5,5 bis 6,5 beträgt. Ganz besonders bevorzugt als Salz der Formel (I) ist das Umsetzungsprodukt von einem Mol Aluminiumhydroxid mit 2,5 bis 3,5 Molen Zitronensäure.

Die erfindungsgemäß einzusetzenden Dispergiermittel können gegebenenfalls im Gemisch mit bekannten anorganischen und/oder organischen Dispergiermitteln eingesetzt werden. Solche Mischungen können beispielsweise 10 bis 90 Gew.-%, vorzugsweise über 30 Gew.-% Verbindungen der Formel (I) enthalten.

Die Herstellung von Verbindungen der Formel (I) kann nach an sich bekannten Verfahren erfolgen.

Vorzugsweise erfolgt die Herstellung von Verbindungen der Formel (I) durch Zusammenbringen der entsprechenden freien Säure oder Gemischen von Säuren oder deren Estern, Amiden oder Alkalisalzen, mit einem Hydroxid, Oxid, Carbonat, Alkoholat oder sonstigen einfachen Salz eines oder mehrerer Metalle K oder den Metallen K selbst in den jeweils gewünschten Mengen. Das Zusammenbringen dieser beiden Komponenten kann beispielsweise in Gegenwart von soviel Wasser erfolgen, daß die Feststoffkonzentration nach der Umsetzung beispielsweise 0,5 bis 85 Gew.-%, vorzugsweise 40 bis 80 Gew.-% beträgt. Nach der erfolgten Umsetzung kann das Reaktionsgemisch gegebenenfalls verdünnt werden. Vorzugsweise werden in diese Umsetzung die freien polybasischen Säuren und das oder die Metalle K in Form ihrer Hydroxide

eingesetzt.

Die Umsetzung kann im allgemeinen ohne die Anwendung von Druck und bei Temperaturen im Bereich 50 bis 115 °C durchgeführt werden. Gegebenenfalls kann man bei Temperaturen über 100 °C und beispielsweise bis 150 °C auch unter Druck arbeiten.

Nach der zuvor beschriebenen Umsetzung liegen die erfindungsgemäß einzusetzenden Verbindungen der Formel (I) im allgemeinen als wäßrige Lösung vor. Sie können aber auch in Form von Suspensionen oder Dispersionen vorliegen, die gelöste und kristalline feste oder amorphe feste Anteile enthalten. Die Verbindungen der Formel (I) können nicht nur im Gemisch mit Wasser, sondern auch in wäßrig/alkoholischen Medien eingesetzt werden, z.B. solche, die neben Wasser noch Methanol, Ethanol, Propanol, Isopropanol, Butanol, Isobutanol, Glykol, Glykolester, Glykolether, Glykolesterether und/oder Polyglykole enthalten.

Man kann die zuvor beschriebene Umsetzung auch in Gegenwart des zu dispergierenden Pulvers (z.B. Füllstoffs und/oder Pigments) durchführen und so das erfindungsgemäß einzusetzende Dispergiermittel praktisch in situ herstellen.

Erfindungsgemäße wäßrige Dispersionen können beispielsweise insgesamt Dispergiermittel in Mengen von 0,02 bis 10 Gew.-% (bezogen auf die in der Dispersion vorhandenen Feststoffe) enthalten. Vorzugsweise liegt diese Menge im Bereich 0,05 bis 5 Gew.-%, insbesondere im Bereich von 0,01 bis 1 Gew.-%. Gegebenenfalls können die wäßrigen Dispersionen auch Anteile an Alkoholen enthalten, beispielsweise Methanol, Ethanol und/oder Glykol in Mengen von beispielsweise 5 bis 95, vorzugsweise 10 bis 45 Gew.-%. Die Dispergiermittel der Formel (I) können gegebenenfalls auch in Kombination mit konventionellen anorganischen oder organischen, ionischen oder nichtionischen Dispergiermitteln eingesetzt werden.

Die Salze der Formel (I) eignen sich beispielsweise zum Dispergieren von beliebigen organischen und anorganischen Feststoffen, beispielsweise Calciumcarbonat, Silikate (wie Talkum, Kaolin und Glimmer), Siliciumdioxid, Glaskugeln, Aluminiumtitanat, Siliciumcarbid, Siliciumnitrid, sonstige Pulver für die Keramikherstellung, Zinkoxid, Titandioxid, Eisenoxiden, organischen Pigmenten (wie $\gamma$-Chinacridon oder Cu-Phthalocyanin), Metalloxiden, Metallpulvern, Metallfasern, Aluminiumoxid, $Al(OH)_3$, Ruß, Graphit, Kohle, Gesteinsmehl, Molybdänsulfid und Calciumsulfat. Die Feststoffe können auch in Form von Gemischen mit erfindungsgemäßen Dispergiermitteln dispergiert werden.

Die zu dispergierenden Feststoffe können kristallin, teilkristallin oder amorph sein und z.B. in Form von Pulvern, Kugeln, Hohlkugeln, Blättchen, Hanteln, Fasern oder deren Gemischen vorliegen.

Besonders bevorzugt sind sie geeignet zur Dispergierung von keramischen Pulvern und anorganischen Pigmenten.

Derartige Dispersionen können neben den zu dispergierenden Feststoffen und Dispergiermitteln gegebenenfalls weitere übliche Zusätze enthalten, beispielsweise konventionelle anorganische oder organische, ionische und/oder nichtionische Dispergiermittel und Hilfsmittel, wie sie bei der Herstellung und Anwendung von Dispersionen üblich sind. Derartige Hilfsmittel können z.B. zur Verbesserung der Sedimentationsbeständigkeit der Dispersionen beitragen oder es kann sich z.B. um Entschäumer, Farbstoffe oder Hilfsstoffe zur Einstellung besonderer Fließeigenschaften handeln. Die letztgenannten Hilfsstoffe können insbesondere thixotrope Eigenschaften hervorrufen. Es kommen hierfür z.B. Cellulosederivate, Saccharide und wäßrige Polyurethanzubereitungen, gegebenenfalls in Kombination mit nichtionischen Tensiden in Frage. Erfindungsgemäße Dispersionen können auch Binder enthalten, beispielsweise solche, die zur Herstellung von technischer Keramik eingesetzt werden. Bevorzugt sind in diesem Zusammenhang Cellulosederivate, Polyvinylalkohol und diverse Polymerlatices, bevorzugt auf Basis von Poly(meth)acrylat-Copolymerisaten, PU-Dispersionen und EVAC-Dispersionen.

Salze der Formel (I) können nicht nur direkt zur Herstellung von Dispersionen eingesetzt werden, sondern auch zur Oberflächenbehandlung von Feststoffen, z.B. Füllstoffen und Pigmenten, die zur Herstellung von Dispersionen vorgesehen sind.

So erhaltene modifizierte Feststoffe können dann in wäßrige und nicht-wäßrige Medien leichter eingearbeitet werden als nicht modifizierte Feststoffe. Als Dispergiermedien kommen beispielsweise Wasser, wasserhaltige Lösemittelgemische und unter besonderen Umständen auch nichtwäßrige Medien in Frage, z.B. Lacklösemittel und Kunststoffe wie Thermoplaste und Duroplaste.

Erfindungsgemäße Dispersionen können beispielsweise 5 bis 95 Gew.-% Feststoffe enthalten. Vorzugsweise liegt ihr Feststoffgehalt zwischen 15 und 95 Gew.-%, besonders bevorzugt zwischen 30 und 80 Gew.-%.

Die Herstellung erfindungsgemäßer Dispersionen kann auf an sich bekannte Weise erfolgen. Beispielsweise kann man das oder die Salze der Formel (I) in Wasser lösen und dann die zu dispergierenden Stoffe unter Rühren zugeben. Man kann das oder die Salze der Formel (I), Wasser und die Feststoffe auch in einer Mühle vermischen und gemeinsam vermahlen. Hilfsmittel und sonstige Zusätze können zusammen

mit oder getrennt von den Salzen der Formel (I) zugesetzt werden.

Der pH-Wert erfindungsgemäßer Dispersionen kann die Fließeigenschaften beeinflussen. Der jeweils optimale pH-Wert kann gegebenenfalls durch einfache Vorversuche ermittelt werden. Er liegt im allgemeinen im Bereich zwischen 1 und 10, vorzugsweise zwischen 4 und 10 und insbesondere zwischen 5 und 8.

Die Beurteilung der erfindungsgemäßen Dispersionen, insbesondere von deren Fließeigenschaften, kann z.B. durch Viskositätsmessungen erfolgen. Screening-Tests werden vorteilhafterweise mit höher konzentrierten Dispersionen durchgeführt, als sie praktisch verwendet werden. Wie in den Beispielen gezeigt, hat dies den Vorteil, daß die absoluten Unterschiede in der Wirksamkeit einzelner Dispergiermittel größer sind und besser und genauer beurteilt werden können.

Erfindungsgemäße Dispersionen zeichnen sich dadurch aus, daß sie hydrolysestabil sind, lagerfähige Dispersionen ergeben und/oder hohe Feststoffgehalte ermöglichen.

Die nachfolgenden Beispiele erläutern die vorliegende Erfindung. Die darin verwendeten Prozentangaben beziehen sich auf das Gewicht, soweit nichts anderes vermerkt ist.

## Beispiele

### Herstellungsbeispiele für Dispergiermittel

Dispergiermittel A:

Aus 1 Mol Aluminiumhydroxid und 3 Mol Zitronensäure wurde eine 75%ige wäßrige Dispersion hergestellt, die 9 h bei 110°C Badtemperatur am Rückfluß gerührt wurde. Es entstand eine nahezu klare Lösung, die auf 50 % Feststoffgehalt verdünnt wurde.

Dispergiermittel B:

Aus 1 Mol Aluminiumhydroxid und 2 Mol Zitronensäure wurde eine 50%ige wäßrige Dispersion hergestellt, die 24 h bei 110°C Badtemperatur am Rückfluß gerührt wurde. Es bildete sich eine trübe Dispersion.

Dispergiermittel C:

Aus 1 Mol Aluminiumhydroxid und 1,5 Mol Zitronensäure wurde eine 70%ige wäßrige Dispersion hergestellt, die 24 h bei 110°C Badtemperatur am Rückfluß gerührt wurde. Es bildete sich eine trübe Dispersion.

Dispergiermittel D:

Aus 1 Mol Aluminiumhydroxid wurde eine 50%ige wäßrige Dispersion hergestellt, die mit 2 Mol Phosphonobutantricarbonsäure bei 100°C gerührt wurde. Nach 10 h hatte sich eine klare Lösung gebildet.

Dispergiermittel E:

Es wurde wie bei Dispergiermittel A gearbeitet, aber mit nur 2,5 Mol Zitronensäure.

Dispergiermittel F:

Es wurde wie bei Dispergiermittel A gearbeitet, aber mit 6 Mol Zitronensäure und einer Reaktionszeit von 48 h.

Dispergiermittel G:

Es wurde gearbeitet wie bei Dispergiermittel A, aber mit 9 Mol Zitronensäure.

Dispergiermittel H:

Es wurde eine 50%ige wäßrige Lösung eines Salzes aus 1 Mol Triethylentetramin und 4 Mol Zitronensäure hergestellt.

Anwendungsbeispiel

Beispiele 1 bis 5 und Vergleichsbeispiele 1 und 2

Aus einem handelsüblichen Aluminiumoxid (Alcoa® 1000 SG) wurden 82%ige wäßrige Dispersionen unter Verwendung des Dispergiermittels A und handelsüblicher Dispergiermittel in üblicher Weise hergestellt. Die Dispersionen wurden über Nacht bei 400 U/min nachgerührt und ihre Viskosität im Haake-Viskosimeter RV 100, Meßkörper MVP II, bei verschiedenen Schergeschwindigkeiten jeweils bei 23 °C gemessen. Die Ergebnisse dieser Messungen sind in Tabelle I aufgeführt. Der Vergleich mit den handelsüblichen Dispergiermitteln (Dispex® A 40 und Dolapix® CE 64)*zeigt die verbesserte Wirksamkeit der erfindungsgemäßen Dispergiermittel.

Tabelle I

| Beispiel Nr. | Dispergiermittel in % (fest/fest) | Viskosität bei D [$s^{-1}$] in mPa.s | | | | |
|---|---|---|---|---|---|---|
| | | 20 | 50 | 100 | 200 | 440 |
| 1 | A 0,10 | 2700 | 1300 | 850 | 730 | n.b. |
| 2 | A 0,15 | 470 | 340 | 280 | 260 | 280 |
| 3 | A 0,20 | 430 | 290 | 220 | 220 | 240 |
| 4 | A 0,30 | 470 | 320 | 240 | 210 | 220 |
| 5 | A 0,40 | 650 | 450 | 290 | 270 | 280 |
| Vergl. 1 | Dispex® A 40 0,3 | 6900 | 3200 | 2100 | 1800 | n.b. |
| Vergl. 2 | Dolapix® CE 64 0,3 | 7200 | 3500 | 2300 | 1900 | n.b. |
| n.b. = nicht bestimmbar | | | | | | |

Beispiele 6 bis 10 und Vergleichsbeispiele 3 bis 5

Es wurde wie im Beispiel 1 gearbeitet, jedoch wurden 83%ige Dispersionen aus dem handelsüblichen Aluminiumoxid BACO® 107 LS (Fa. Alcan) hergestellt. Die Ergebnisse der Viskositätsmessungen sind in Tabelle 2 aufgeführt. Der Vergleich mit dem handelsüblichen Dispergiermittel Dispex® A 40 zeigt die verbesserte Wirksamkeit der erfindungsgemäßen Dispergiermittel, insbesondere bei niedrigen Wirkstoffkonzentrationen.

Tabelle 2

| Beispiel Nr. | Dispergiermittel in % (fest/fest) | Viskosität bei D [$s^{-1}$] in mPa.s | | | | |
|---|---|---|---|---|---|---|
| | | 20 | 50 | 100 | 200 | 440 |
| 6 | A 0,10 | 530 | 340 | 260 | 220 | n.b. |
| 7 | A 0,15 | 190 | 150 | 130 | 90 | 90 |
| 8 | A 0,20 | 190 | 140 | 110 | 99 | 90 |
| 9 | A 0,30 | 380 | 250 | 160 | 180 | 180 |
| 10 | A 0,40 | 470 | 340 | 280 | 260 | 280 |
| Vergl. 3 | Dispex® A 40 0,20 | 380 | 260 | 210 | 180 | 160 |
| Vergl. 4 | Dispex® A 40 0,30 | 420 | 280 | 190 | 210 | 210 |
| Vergl. 5 | Dispex® A 40 0,40 | 490 | 360 | 310 | 280 | 310 |
| n.b. = nicht bestimmbar | | | | | | |

*) Dispex ist eine Handelsbezeichnung für Polyacrylate, Dolapix eine Handelsbezeichnung für synthetische Polyelektrolyte.

Beispiele 11 bis 13

Es wurde wie im Beispiel 1 gearbeitet, jedoch wurden jeweils 0,3 % (fest/fest) anderer erfindungsgemäßer Dispergiermittel zugegeben. Die Ergebnisse der Viskositätsmessungen sind in Tabelle 3 aufgeführt.

Tabelle 3

| Beispiel Nr. | Dispergiermittel in % (fest/fest) | Viskosität bei D [$s^{-1}$] in mPa.s | | | | |
|---|---|---|---|---|---|---|
| | | 20 | 50 | 100 | 200 | 440 |
| 11 | C | 470 | 450 | 300 | 270 | 310 |
| 12 | B | 470 | 450 | 300 | 260 | 270 |
| 13 | E | 470 | 450 | 300 | 260 | 280 |

Beispiele 14 bis 18

Es wurde wie in Beispiel 1 gearbeitet, jedoch wurden andere erfindungsgemäße Dispergiermittel eingesetzt. Die Ergebnisse der Viskositätsmessungen sind in Tabelle 4 aufgeführt.

Tabelle 4

| Beispiel Nr. | Dispergiermittel in % (fest/fest) | Viskosität bei D [$s^{-1}$] in mPa.s | | | | |
|---|---|---|---|---|---|---|
| | | 20 | 50 | 100 | 200 | 440 |
| 14 | D 0,15 | 190 | 120 | 90 | 80 | 80 |
| 15 | D 0,20 | 190 | 120 | 90 | 80 | 80 |
| 16 | F 0,20 | 190 | 130 | 90 | 80 | 80 |
| 17 | G 0,20 | 190 | 140 | 100 | 90 | 80 |
| 18 | H 0,20 | 220 | 160 | 110 | 90 | 80 |

Beispiele 19 bis 22

Es wurde wie im Beispiel 1 gearbeitet, jedoch wurden Gemische aus erfindungsgemäßen Dispergiermitteln mit bekannten Dispergiermitteln eingesetzt. Die Ergebnisse der Viskositätsmessungen sind in Tabelle 5 aufgeführt. Die angegebenen Mischungsverhältnisse sind Gewichtsteile.

Tabelle 5

| Beispiel Nr. | Dispergiermittel | Dosierung % (fest/fest) | Viskosität bei D [$s^{-1}$] in mPa.s | | | | |
|---|---|---|---|---|---|---|---|
| | | | 20 | 50 | 100 | 200 | 440 |
| 19 | D und Dispex® A 40 1:1 | 0,2 | 190 | 140 | 110 | 90 | 80 |
| 20 | D und Dispex® A 40 3:1 | 0,2 | 190 | 130 | 110 | 90 | 80 |
| 21 | A und Dispex® A 40 1:1 | 0,2 | 190 | 140 | 110 | 90 | 80 |
| 22 | A und Dolapix® CE 1:1 | 0,2 | 190 | 140 | 110 | 80 | 80 |

Beispiel 23 und Vergleichsbeispiel 6

Es wurde wie in Beispiel 1 gearbeitet, jedoch wurde Zitronensäuremonohydrat anstelle der Verbindung A zugegeben (in situ - Herstellung des Dispergiermittels) und eine 84%ige Dispersion hergestellt. Die Ergebnisse der Viskositätsmessungen sind in Tabelle 6 aufgeführt.

| Beispiel Nr. | Dispergiermittel in % (fest/fest) | Viskosität bei D [$s^{-1}$] in mPa.s | | | | |
|---|---|---|---|---|---|---|
| | | 20 | 50 | 100 | 200 | 440 |
| 23 | 0,30 | 230 | 140 | 110 | 90 | 80 |
| Vergl. 6 | Dispex® A 40 0,30 | 1520 | 760 | 600 | 530 | n.b. |
| n.b. = nicht bestimmbar | | | | | | |

Beispiele 24 bis 27 und Vergleichsbeispiel 7

Es wurde wie im Beispiel 1 gearbeitet, jedoch wurde mit verschiedenen Dispergiermittelkombinationen 76%ige Dispersionen aus Titandioxid (Bayertitan® T, Bayer AG) hergestellt. Die Ergebnisse der Viskositätsmessungen sind in Tabelle 7 aufgeführt. Die angegebenen Mischungsverhältnisse sind Gewichtsteile.

Tabelle 7

| Beispiel Nr. | Dispergiermittel | Dosierung % (fest/fest) | Viskosität bei D [$s^{-1}$] in mPa.s | | | | |
|---|---|---|---|---|---|---|---|
| | | | 20 | 50 | 100 | 200 | 440 |
| 24 | D und Dispex® A 40 1:1 | 0,2 | 190 | 110 | 80 | 70 | 60 |
| 25 | D und Dispex® A 40 3:1 | 0,2 | 90 | 80 | 60 | 50 | 50 |
| 26 | D und Dispex® A 40 2:1 | 0,2 | 90 | 80 | 70 | 60 | 60 |
| 27 | A und Dispex® A 40 1:1 | 0,2 | 190 | 110 | 90 | 80 | 70 |
| Vergl. 7 | Dispex® A 40 | 0,2 | 380 | 190 | 110 | 90 | 80 |

## Patentansprüche

1. Die Verwendung von Salzen der Formel (I)

$$R\,(COO)_x^{\ominus}\quad(PO_3)_y^{2\ominus}\quad(SO_3)_z^{\ominus}\quad K_m^{p\oplus}\quad H_n^{\oplus}\qquad (I)$$

in der
R für einen gegebenenfalls Heteroatome enthaltenden organischen Kohlenwasserstoffrest und

$$K^{p\oplus}$$

für ein Kation der Wertigkeit p stehen und
der mittlere Wert für p größer ist als 1,2 und folgende Bedingungen gelten
x, y, z können jeweils für sich alleine Null oder eine ganze Zahl sein,
$x + y/2 + z$ ist mindestens 2,
$x + 2y + z = (p \cdot m) + n$ und
$n : m = 1$ oder größer als 1
als Dispergiermittel für Wasser enthaltende Dispersionen und wäßrige Dispersionen, die Salze der Formel (I) als Dispergiermittel enthalten.

2. Verwendung nach Anspruch 1, dadurch gekennzeichnet, daß in Formel (I) R für einen geradkettigen, verzweigtkettigen oder cyclischen, gesättigten oder ungesättigten organischen Rest steht, der 1 bis 20 000 C-Atome enthält.

**3.** Verwendung nach Ansprüchen 1 und 2, dadurch gekennzeichnet, daß in Formel (I) R zusätzlich zu den $COO^{\ominus}$-,

$$PO_3^{2\ominus}-$$

und/oder $SO_3^{\ominus}$-Gruppen, Ester-, Hydroxyester-, Säureamid-, Nitril-, OH-, SH- und/oder gegebenenfalls substituierte aromatische Gruppen enthält.

**4.** Verwendung nach Ansprüchen 1 bis 3, dadurch gekennzeichnet, daß in Formel (I) der Teil

$$R(COO)_x^{\ominus}(PO_3)_y^{2\ominus}(SO_3)_z^{\ominus}$$

aus dem Rest von Homo- oder Copolymeren von Acryl- und/oder Methacrylsäure, aus dem Rest von Hydrolysaten von Oligomeren, Cooligomeren, Polymeren und/oder Copolymeren des Acrylnitrils und/oder Methacrylnitrils, aus dem Rest einer gegebenenfalls kondensierten und/oder gegebenenfalls bis zu drei $C_1$-$C_{12}$-Alkylseitenketten enthaltenden Naphthalin- und/oder Benzol-di- oder -polysulfonsäuren, aus dem Rest von Umsetzungsprodukten von Sulfanilsäure mit Polymeren, aus dem Rest von Sulfobernsteinsäure, Sulfobernsteinsäurehalbestern, Zitronensäure, partiellen Zitronensäureestern, Weinsäure, Äpfelsäure, Ascorbinsäure, $C_5$-$C_{12}$-Zuckersäuren oder anderen Hydroxylgruppen enthaltenden, gegebenenfalls teilsubstituierten Di- oder Polycarbonsäuren, aus dem Rest von organische Reste enthaltenden Phosphor-, Polyphosphor-, Phosphin- oder Phosphonsäuren, aus dem Rest von Phosphonocarbonsäuren oder aus dem Rest von Malein-, Fumar-, Itakon-, Citrakon- oder Bernsteinsäure besteht.

**5.** Verwendung nach Ansprüchen 1 bis 4, dadurch gekennzeichnet, daß in Formel (I) K für Magnesium-, Calcium-, Zink-, Eisen(II)-, Eisen(III)- und/oder Aluminium-Kationen steht.

**6.** Wäßrige Dispersionen, die Salze der Formel (I) (siehe Anspruch 1) als Dispergiermittel enthalten.

**7.** Dispersionen nach Anspruch 6, dadurch gekennzeichnet, daß es sich um wäßrige Dispersionen, wäßrig/alkoholische Dispersionen oder alkoholische Dispersionen handelt.

**8.** Dispersionen nach Ansprüchen 6 und 7, dadurch gekennzeichnet, daß sie 0,02 bis 10 Gew.-% (bezogen auf die in der Dispersion vorhandenen Feststoffe) Dispergiermittel enthalten.

**9.** Dispersionen nach Ansprüchen 6 bis 8, dadurch gekennzeichnet, daß sie als Feststoffe Calciumcarbonat, Silicate, Siliciumdioxid, Glaskugeln, Aluminiumtitanat, Siliciumcarbid, Siliciumnitrid, Pulver für die Keramikherstellung, Zinkoxid, Titandioxid, Eisenoxide, organische Pigmente, Metalloxide, Metallpulver, Metallfasern, Aluminiumoxid, Aluminiumhydroxid, Ruß, Graphit, Kohle, Gesteinsmehle, Molybdänsulfid und/oder Calciumsulfat enthalten.

**10.** Dispersionen nach Ansprüchen 6 bis 9, dadurch gekennzeichnet, daß sie zusätzlich konventionelle anorganische oder organische, ionische und/oder nichtionische Dispergiermittel und/oder Hilfsmittel enthalten, die bei der Herstellung und Anwendung von Dispersionen üblich sind.

Europäisches Patentamt

# EUROPÄISCHER RECHERCHENBERICHT

Nummer der Anmeldung
EP 93 11 1847

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | WO-A-92 00347 (ECC AMERICA INC.)<br><br>*ZUSAMMENFASSUNG; SEITE 1, ZEILE 4 BIS SEITE 6, ZEILE 27; BEISPIEL VI; FIG.6;ANSPRÜCHE 1 - 7, 10 - 15*<br>--- | 1,2,4-6, 8-10 | B01F17/00<br>B01F17/02<br>B01F17/04<br>B01F17/06<br>B01F17/08<br>B01F17/10<br>B01F17/12<br>B01F17/14<br>B01F17/44<br>B01F17/50<br>B01F17/52 |
| X | EP-A-0 047 882 (BAYER AG)<br>*SEITE 1, ZEILE 1 BIS SEITE 3, ZEILE 23; SEITE 4, ZEILE 22 BIS SEITE 6, ZEILE 18;SEITE 6, ZIELE 24 BIS SEITE 7, ZEILE 15; SEITE 8, ZEILE 24 BIS SEITE 10, ZEILE4; ANSPRÜCHE 2 - 7*<br>--- | 1-3,5-10 | |
| X | EP-A-0 401 790 (PLÜSS - STAUFER AG)<br>* SEITE 1, ZEILE1 BIS SEITE 20, ZEILE 29; BEISPIEL 9;SEITE 42, ZEILEN 44 BIS 56;SEITE 43, ZEILE 28 BIS SEITE 44, ZEILE 22; ANSPRÜCHE 4, 6 *<br>--- | 1-10 | |
| X | EP-A-0 073 606 (DIAMOND SHAMROCK CORPORATION)<br>* SEITE 1, ZEILE 7 -BIS SEITE 7, ZEILE 15; BEISPIELE 6, 10, 11, 14, 17, 20, 23, 33, 36, 38, 43, 44, 46, 51, 54; ANSPRÜCHE 1 - 29 *<br>--- | 1-10 | **RECHERCHIERTE SACHGEBIETE (Int.Cl.5)**<br>B01F |
| D,X | DATABASE WPI<br>Derwent Publications Ltd., London, GB;<br>AN 81-78627D<br>& JP-A-56 115 630 (TOA GOSEI CHEM IND LTD)<br>* Zusammenfassung *<br>--- | 1-6,9 | |
| X | DATABASE WPI<br>Derwent Publications Ltd., London, GB;<br>* Zusammenfassung *<br>---<br>-/-- | 1-6,8,9 | |

Der vorliegende Recherchenbericht wurde für alle Patentansprüche erstellt

| Recherchenort | Abschlußdatum der Recherche | Prüfer |
|---|---|---|
| DEN HAAG | 19. November 1993 | FISCHER, W |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 93 11 1847

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 340 583 (BAYER AG)<br>* Seite 3, Zeile 1 - Seite 6, Zeile 39; Ansprüche 1,2,5-9; Beispiel 9 *<br>----- | 1-4,6, 8-10 | |
| | | | RECHERCHIERTE SACHGEBIETE (Int.Cl.5) |

Der vorliegende Recherchenbericht wurde für alle Patentansprüche erstellt

| Recherchenort | Abschlußdatum der Recherche | Prüfer |
|---|---|---|
| DEN HAAG | 19. November 1993 | FISCHER, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)